# EUROPEAN PATENT SPECIFICATION

(11) **EP 1 499 653 B1**
(45) Date of publication and mention of the grant of the patent: **18.05.2011**
(21) Application number: 03721570.4
(22) Date of filing: 08.04.2003
(51) Int. Cl.: C08G 18/10, C08G 18/73, A63B 37/12

(54) **POLYURETHANE ELASTOMERS FROM HDI PREPOLYMERS WITH REDUCED CONTENT OF FREE HDI MONOMERS**
POLYURETHANELASTOMERE AUS HDI PRÄPOLYMEREN MIT EINEM VERRINGERTEN GEHALT AN FREIEN HDI MONOMEREN
ELASTOMERES DE POLYURETHANNE OBTENUS A PARTIR DE PREPOLYMERES HDI AVEC UN CONTENU REDUIT DE MONOMERES HDI LIBRES

(30) Priority: 26.04.2002 US 133265
(43) Date of publication of application: 26.01.2005
(73) Proprietor: Chemtura Corporation, Middlebury, CT 06749 (US)
(72) Inventor: ROSENBERG, Ronald, O., Orange, CT 06477 (US); ZHU, Zhenya, New Milford, CT 06776 (US); PROCTOR, Glenn, C., Wallingford, CT 06492 (US); LITKE, Brian, D., Gastonia, North Carolina 28054 (US)
(74) Representative: Serravalle, Marco
(86) International application number: PCT/US2003/010741
(87) International publication number: WO 2003/091306

(56) References cited:
- EP-A- 0 327 031
- EP-A- 0 390 537
- DE-A- 1 962 533
- US-B1- 6 309 313
- DATABASE WPI Week 199719 Derwent Publications Ltd., London, GB; AN 1997-209570 XP002246590 & PATENT ABSTRACTS OF JAPAN vol. 1997, no. 07, 31 July 1997 (1997-07-31) & JP 09 059566 A (TOUPE:KK), 4 March 1997 (1997-03-04)
- DATABASE WPI Week 198807 Derwent Publications Ltd., London, GB; AN 1988-046272 XP002246591 & JP 63 003869 A (ASAHI CHEMICAL IND), 8 January 1988 (1988-01-08)
- DATABASE WPI Week 199733 Derwent Publications Ltd., London, GB; AN 1997-359154 XP002246592 & PATENT ABSTRACTS OF JAPAN vol. 1997, no. 10, 31 October 1997 (1997-10-31) & JP 09 151230 A (NIPPON POLYURETHANE IND CO LTD), 10 June 1997 (1997-06-10)

## Description

### BACKGROUND OF THE INVENTION

### 1. Field of the Invention

This invention generally relates to preparing castable polyurethane prepolymers containing reduced levels of unreacted hexamethylene 1,6-diisocyanate (HDI) monomer. More particularly, this invention is directed to producing high performance HDI-based cast polyurethane elastomer chains extended with diols and/or diamines. These systems provide improved industrial hygiene, easier casting, and improved mechanical properties. Golf ball covers produced from such systems exhibit a surprising combination of resilience, durability (groove shear resistance) and colorfastness. Rolls, tires and wheels with low hysteresis can also be produced from such systems.

### 2. Description of Related Art

Castable polyurethane elastomers are well known and can be formed from a polyurethane prepolymer based on a reaction of a molar excess of diisocyanate monomer(s), e.g., aromatic diisocyanates such as diphenylmethane diisocyanate (MDI), toluene diisocyanate (TDI), or para-phenylene diisocyanate (PPDI) or aliphatic diisocyanates such as dicyclohexylmethane diisocyanate (H₁₂MDI), isophorone diisocyanate (IPDI) or trans-1,4-cyclohexanediisocyanate (CHDI), with an organic polyol, e.g., polytetramethylene ether glycol (PTMEG), polyester or polycaprolactone glycol (PE), homopolymers and copolymers of ethylene oxide and propylene oxide (E/PO) and a chain extender, e.g., an aliphatic diol such as 1,4 butanediol (BD) or an aromatic diamine such as diethyltoluene diamine (DETDA). Catalysts such as triethylene diamine (TEDA) can be used to increase the reactivity of the components. Additional components such as, for example, UV stabilizers, antioxidants, dyes and antistatic agents, can also be added.

The use of a molar excess of the diisocyanate monomers in forming polyurethane prepolymers leaves residual unreacted monomer, resulting in potential industrial hygiene issues. Accordingly, efforts have been made to convert the diisocyanate monomers to polyurethane prepolymers with a reduced content of free diisocyanate monomer. See, e.g., British Patent No. 1,101,410 and U.S. Patent Nos 4,182,825; 4,288,577; 4,892,920; 5,202,001 and 5,703,193. It is advantageous to have polyurethane prepolymers with a reduced content of free diisocyanate monomer in preparing cast elastomers in that better hygiene, processing ease, and elastomer mechanical performance are achieved. Prepolymers from those diisocyanate monomers with the highest vapor pressures, hence the greatest hygiene concerns, e.g., TDI, PPDI, and IPDI, have been offered commercially in low-free-monomer form from such sources as Crompton Corp., Baxenden and Air Products.

It is well known that both skin contact and inhalation of diisocyanate monomers must be carefully avoided. Much attention has been given to removal of unreacted TDI from prepolymers. Various methods to reduce the unreacted TDI levels in prepolymers are known and disclosed in, for example, U.S. Patent Nos. 3,248,372; 3,384,624 and 4,061,662. Commercial TDI prepolymers with below 0.1 % residual monomer are available.

Among the various processes that have been developed in attempts to reduce the quantity of unreacted monomeric diisocyanate levels in prepolymers are processes or methods that use falling film evaporators, wiped film evaporators, distillation techniques, solvent extraction, and molecular sieves. For example, U.S. Patent No. 4,182,825 discloses a process to reduce the amount of diisocyanate (TDI) by distilling a prepolymer reaction product under vacuum conditions. U.S. Patent No. 4,385,171 discloses a methods for the removal of unreacted diisocyanate monomer (TDI) from prepolymers by codistilling the prepolymer reaction product with a compound that boils at a temperature greater than the boiling point of the diisocyanate. U.S. Patent No. 5,703,193 discloses a process for reducing the amount of residual organic diisocyanate monomer (PPDI) in prepolymers by codistilling the reaction product in the presence of a combination of two inert solvents, with the first inert solvent having boiling point below the boiling point of the diisocyanate monomer and the second inert solvent having temperature boiling point above the boiling point of the diisocyanate monomer. U.S. Patent No. 4,061,662 discloses a process for the removal of unreacted toluene diisocyanate from prepolymers by passing the prepolymer reaction product through a column containing molecular sieves. U.S. Patent No. 4,288,577 discloses the removal of unreacted methylene bis(4-phenyl isocyanate) (MDI) via solvent extraction with hexane.

Of these processes, distillation is much simpler and more economical than solvent extraction or molecular sieve adsorption. There is no need to subsequently separate the monomer from either (flammable) hexane solvent or molecular sieves. However, in the distillation of diisocyanate monomers from polyurethane prepolymers, high temperatures must be avoided to prevent decomposition reactions in the prepolymer. Distillation without use of solvents is simpler still.

Another aliphatic diisocyanate is the monomer 1,6-hexamethylene diisocyanate (HDI). Only the aromatic monomers TDI and MDI are used more widely. However, while HDI finds widespread commercial use in polyurethane coatings, it is rarely used in cast elastomers as the health hazards of unreacted HDI monomer are well known. Because HDI has a low boiling point and high vapor pressure similar to TDI, PPDI, and IPDI, it is generally converted to a higher molecular weight adduct before sale. These adducts typically have a high functionality, e.g., about 3. They are not polyurethane adducts, as they contain no urethane linkages. Rather, they contain isocyanurate linkages or biuret linkages. The volatile HDI monomer is typically removed from the much less volatile adduct by agitated film vacuum distillation. See, e.g., U.S. Patent No. 4,888,442 which discloses such adducts, with functionality greater than about 2.5.

EP 0 327 031 discloses a urethane prepolymer prerpared by reacting 1,6 hexamethylene diisocyanate (HDI) and a polytetramethyleneglycol having a number average molecular weight of 1000 at an NCO/OH equivalent ratio of 15 and distilling off the unreacted HDI in a wiped film evaporator, whereby a prepolymer having an NCO content of 6.2 % by weight an containing unreacted HDI in an amount of 0.1 % by weight is obtained. The prepolymer is chain extended with an acrylic polyol.

Prepolymers of both aromatic and aliphatic diisocyanates are heat-sensitive. However, prepolymers based on aromatic diisocyanates are much more thermally unstable than prepolymers based on aliphatic diisocyanates. Polyurethane prepolymers made from aliphatic diisocyanates are more resistant to thermal degradation than those made from aromatic diisocyanates, making removal of aliphatic monomeric diisocyanate by distillation less difficult. However, polyurethanes based on aliphatic diisocyanates are generally accompanied by a decrease in the mechanical properties. The presence of an aromatic diisocyanate in the hard segment typically produces a stiffer polymer chain with a higher melting point. For example, U.S. Patent No. 6,046,297 discloses the inferiority of prepolymers based on H₁₂MDI to those from TDI or mixtures of TDI and H₁₂MDI.

Accordingly, it would be desirable to provide polyurethane prepolymers based on an aliphatic diisocyanate which is suitable for producing cast polyurethane elastomers having excellent mechanical properties. Applications directed to golf ball covers would be particularly desirable, as existing cast polyurethane covers from aromatic diisocyanates exhibit an unwelcome tendency to yellow over time.

TDI-based solid polyurethane elastomers are most commonly made by reacting the liquid prepolymers with aromatic diamines, e.g., 4,4'-methylene-bis(3-chloroaniline) (MBCA) to give satisfactory properties. Diol curatives give generally inferior properties with TDI prepolymers. MBCA is a suspect carcinogen that requires careful attention to industrial hygiene during casting

For industrial safety, it would be particularly desirable to have prepolymers that are both (a) low in monomeric diisocyanate level and (b) capable of being used with diol chain extenders or aromatic diamine chain extenders that are not cancer suspect. Methylene dianiline derivatives that are fully alkylated at the four positions ortho to the amine groups are reported as a class to be Ames negative and of reduced suspicion as potential carcinogens. Examples of such aromatic diamines include 4,4'-methylene-bis(3-chloro-2,6-diethylaniline) and 4,4'-methylene-bis(2,6-diethylaniline), available from Lonza, Inc. (Basel, Switzerland) as Lonzacure MCDEA and Lonzacure MDEA respectively. (See, e.g., Voelker et al, "Journal of Elastomers and Plastics", 20, 1988 and ibid, 30th Annual Polyurethane/Technical Marketing Conference, 1986.)

For many applications, aromatic amine chain extenders are preferred to diol (glycol) chain extenders - "Glycol extended polyurethanes are more flexible and less strong than the amine-extended analogs" as disclosed in Lamba et al., page 17, in "Polyurethanes in Biomedical Applications", CRC Press LLC, page 17, (1998), and give generally higher hysteresis. Consequently, amine-extended polyurethanes are generally used in applications such as, for example, tires and rolls, which are subject to failure from overheating by hysteresis. Thus, it would be desirable to provide an aliphatic diisocyanate-based prepolymer that is capable of being chain-extended by a diamine curative to yield cast elastomers with low hysteresis.

### SUMMARY OF THE INVENTION

It is therefore an object of this invention to provide new, substantially difunctional polyurethane prepolymers of HDI having a reduced content of unreacted HDI whereby the polyurethane prepolymers are rendered capable of being chain-extended by a diamine curative, e.g., trimethylene glycol di-p-aminobenzoate, or a diol curative.

It is another object of the present invention to provide a new distillation method for removing HDI monomers from a prepolymer reaction product mixture prepared by the reaction of an HDI monomer with a polyol.

Another object of the present invention is to provide castable polyurethane elastomer systems that are hygienically safe, that cast without difficulty, and provide elastomers with excellent mechanical properties.

A further object is to provide golf ball covers with excellent mechanical properties, e.g., resilience and shear resistance, and with colorfastness on aging, thereby permitting elimination of a paint coating on the covers obtained from such prepolymers and their elastomers.

Yet a further object of the present invention is to provide wheels, e.g., those used on forklifts, tires and rollers with excellent mechanical performance obtained from such prepolymers and their elastomers.

The present invention relates to the preparation of low free HDI polyurethane prepolymers from difunctional polyols and their ready conversion to cast elastomers from hydroxy or amine curatives, e.g., aliphatic diols or aromatic diamines. The resulting elastomers possess surprisingly good dynamic mechanical properties in golf ball covers, e.g., resisting mechanical damage from the shearing action of grooves in golf clubs, while providing high resilience for long flight.

The present invention also relates to reducing the content of unreacted HDI monomer in a difunctional prepolymer reaction product by distilling the reaction product under vacuum in an agitated film evaporator. The molar ratio of the HDI diisocyanate monomer to the one or more polyols (i.e., the ratio of NCO groups to OH groups) can range from 2:1 to 30:1, with 8:1 to 20:1 being preferred. The OH functionality of the polyol or polyol blend is 1.9 to 2.3, preferably 1.98 to 2.1 and most preferably 2.0.

In a preferred embodiment, two or more distillation stages are employed in series with successively more powerful vacuum to successively reduce the content of monomer in the prepolymer to below 2% by weight and most preferably below 0.1% by weight.

The present invention further relates to polyurethane elastomers obtained by chain extending the low monomeric HDI containing prepolymers containing low concentrations of monomeric HDI. The chain extenders can be hydroxy or amine functional such as aliphatic diols or aromatic diamines. The extender/prepolymer stoichiometry (i.e., the molar ratio of hydroxyl or amine groups to isocyanate groups) can range from 70% to 120% and most preferably from 90% to 105%.

Accordingly, the present invention is directed to a process for reducing the amount of residual 1 ,6-hexamethylene diisocyanate (HDI) monomer in a polyurethane prepolymer reaction product comprising the step of distilling the reaction product in one or more agitated film evaporators in series under vacuum to reduce the level of unreacted HDI monomer to below 2 wt.%.

In another embodiment of the present invention, a polyurethane prepolymer is provided which comprises the reaction product of one or more polyols and a stoichiometric excess of HDI diisocyanate monomer at an NCO:OH ratio in the range of from about 2:1 to about 30:1, wherein the unreacted HDI diisocyanate monomer is removed by a process comprising distilling the reaction product in one or more agitated film evaporators in series under vacuum.

Yet another embodiment of the present invention, there is provided a polyurethane prepolymer comprising the reaction product of one or more polyols and a stoichiometric excess of HDI diisocyanate monomer at an NCO:OH ratio in the range of from 2:1 to 30:1, wherein the unreacted HDI diisocyanate monomer is removed by a process comprising distilling the reaction product in one or more agitated film evaporators in series under vacuum.

In yet another embodiment of the present invention, a polyurethane elastomer comprising the reaction product of (a) a prepolymer terminated with HDI, said prepolymer comprising no more than 2 wt.% free HDI. and at least 70% of theoretical NCO content for pure ABA structure with (b) a hydroxy or amine-functional chain extender, wherein the equivalent ratio of chain extender to prepolymer is in the range of from 0.7:1 to 1.2:1.

A preferred embodiment of the present invention is a polyurethane elastomer comprising the reaction product of (a) a HDI-terminated prepolymer comprising the reaction product of one or more polyols having an overall functionality of 1.9 to 2.3 with a stoichiometric excess of HDI diisocyanate monomer at an NCO:OH ratio in the range of from 2:1 to 30:1; wherein unreacted HDI diisocyanate monomer is removed from the reaction product by a process comprising distilling the reaction product in one or more agitated film evaporators in series under vacuum; with (b) a chain extender selected from the group consisting of aliphatic diols, aromatic diamines or combinations thereof; wherein the equivalent ratio of prepolymer to chain extender is in the range of from 0.7:1 to 1.2:1.

Another preferred embodiment of the present invention is a golf ball cover comprising a core and a cover, the cover comprising a polyurethane elastomer, the polyurethane elastomer comprising the reaction product of (a) a HDI-terminated prepolymer comprising the reaction product of one or more polyols with a stoichiometric excess of HDI diisocyanate monomer wherein unreacted HDI diisocyanate monomer is removed to less than about 2 wt. % and (b) at least one hydroxy or amine functional chain extender.

Yet another preferred embodiment of the present invention is a wheel or roll comprising a core and a polyurethane cover wherein the cover comprises a polyurethane elastomer comprising the reaction product of (a) a HDI-terminated prepolymer comprising the reaction product of one or more polyols with a stoichiometric excess of HDI diisocyanate monomer wherein unreacted HDI diisocyanate monomer is removed to less than 2 wt. % and (b) at least one hydroxy or amine functional chain extender.

### DETAILED DESCRIPTION OF THE INVENTION

The present invention is directed to the removal of the monomeric diisocyanate HDI from prepolymer reaction products. The expression "prepolymer reaction product" as used herein shall be understood to mean the product from the reaction of one or more polyols and one or more diisocyanates. The polyurethane prepolymers herein can be obtained by reacting one or more polyols with a diisocyanate monomer by procedures known in the art. According to the present invention, a prepolymer is formed by the reaction of one or more polyols, e.g., polyethers and/or polyesters, with a large excess of diisocyanate monomer, such as HDI.

U.S. Patent No. 4,888,442 disclosed the removal of low boiling, aliphatic monomers 4,4'-methylene bis (cyclohexyldiisocyanate) and 1,6-diisocyanatohexane from polyisocyanate adduct mixtures and solvents of lower boiling point by distillation. According to the process, the polyisocyanate adduct was prepared without solvent. Unreacted diisocyanate level was first reduced by distilling the reaction product without solvent once, and further reduced by distilling the treated reaction product in the presence of 2 to 30% of an inert solvent. This process required separating the inert solvent from the diisocyanates if the solvent and/or the diisocyanates were to be reused, resulting in additional unnecessary cost. The adducts of HDI were isocyanurate and biuret types, but not polyurethane prepolymer type; they contained no urethane bonds and did not derive from polyols.

According to the present invention, it is practical to prepare polyurethane prepolymers with HDI content reduced to below 2% by weight, preferably below 0.5 wt.% and most preferably below 0.1% by weight without the use of solvents. Preferably, the prepolymer is passed through two or more agitated film vacuum distillation stages in series with progressively deeper vacuum to reduce the HDI content to below 0.1 % by weight.

The polyurethane prepolymers of the present invention can be prepared by reacting a stoichiometric excess of the HDI diisocyanate monomers with one or more polyols. If desired, other diisocyanate monomers can be employed herein in minor amounts, e.g., amounts up to about 15 weight percent, preferably up to about 5 weight percent and most preferably about 0 weight percent. Examples of other diisocyanates include aromatic diisocyanates such as TDI and MDI. MDI is commercially available as the pure isomer 4,4'-diphenyl methane diisocyanate from such sources as Mondur MP and Bayer and as mixtures of isomers from such sources as Mondur ML, Bayer, Lupranate MI and BASF. Other aromatic diisocyanate monomers include PPDI, tolidene diisocyanate (TODI), naphthalene-1, 5-diisocyanate (NDI), diphenyl-4, 4'-diisocyanate, stilbene-4,4'-diisocyanate, benzophenone-4,4'-diisocyanate, and mixtures thereof. Aliphatic diisocyanate monomers include dibenzyl-4,4'-diisocyanate, isophorone diisocyanate (IPDI), 1,3 and 1,4-xylene diisocyanates, 1,3-cyclohexyl diisocyanate, 1,4-cyclohexyl diisocyanate (CHDI), the three geometric isomers of 1,1'-methylene-bis(4-isocyanatocyclohexane) (H₁₂MDI), and mixtures thereof.

Suitable polyols for use herein are typically high molecular weight polyols including, but not limited to, polyethers, polyesters such as, for example, polycaprolactones, polycarbonates, or hydrocarbon polyols having a molecular weight ranging from 100 to 12,000 to prepare prepolymers for cast elastomers. It is to be understood herein that molecular weights and equivalent weights are number average. If desired, low molecular weight glycols or triols, those glycols or triols having a molecular weight from 62 to 400, can be included. I prepolymer with a polyol or combination of polyols having an overall functionality of from 1.9 to 2.3, preferably from 1.95 to 2.2, and most preferably from 1.98 to 2.1.

Suitable high molecular weight polyols having a number average molecular weight of at least 250, are used to prepare the prepolymer of the instant invention. Preferably the polyols have a molecular weight of 400 to 6000 and most preferably a molecular weight of from 500 to 4000. However, the molecular weight of the high molecular weight polyols may be as high as 12,000 or as low as 100.

The preferred polyether polyols are polyalkyleneether polyols represented by the general formula HO(RO)ₙH, wherein R is an alkylene radical and n is an integer large enough that the polyether polyol has a number average molecular weight of at least 250. These polyalkyleneether polyols are well-known components of polyurethane products and can be prepared by the polymerization of cyclic ethers, e.g., alkylene oxides, and glycols, dihydroxyethers, and the like by methods known in the art. Examples include those polyether polyols available as Terathane PTMEG polyols from Dupont and Poly G polyols of propylene oxide and ethylene oxide from Arch Chemical.

The polyester polyols are prepared by reaction of dibasic acids, e.g., adipic acid, glutaric, sebacic, or phthalic acid, with diols such as, for example, ethylene glycol, 1,2-propylene glycol, 1,4-butanediol, 1,6-hexanediol and the like, where linear polymer segments are required. Minor amounts of units of higher functionality, such as glycerol or trimethylolpropane, may be employed. Polyester polyols are available as Fomrez polyester polyols from Crompton and as Rucoflex polyester polyols from Bayer.

Some polyester polyols employ caprolactone or dimerized unsaturated fatty acids in their manufacture. Polycaprolactone polyols are available as TONE polyols from Dow. Polycarbonate polyols are available as Desmophen 2020E from Bayer. Other suppliers include Daicel (Japan) and Ube (Japan). Suitable hydrocarbon polyols include those produced from butadiene available as Poly-Bd from Sartomer and Krasol from Kaucuk (Czech Republic).

Preferred polyols of the current invention include polytetramethylene ether glycols (PTMEG),), polycaprolactones, polycarbonates, and polyesters from adipic acid.

The total polyol blend portion of the instant invention can be a combination of high molecular weight polyol, as previously described, and low molecular weight polyol. An aliphatic glycol is the preferred low molecular weight polyol. Suitable aliphatic polyols are ethylene glycol, diethylene glycol, triethylene glycol, tetraethylene glycol, propylene glycol, dipropylene glycol, tripropylene glycol, neopentyl glycol, 1,3-butanediol, 1,4-butanediol, and thelike. In general, the weight of the low molecular weight polyol should be no more than 20% of the combination of high molecular weight polyol and low molecular weight polyol. The preferred range is 0 to 15% of the combination; more preferred is 0-8%.

When forming the polyurethane prepolymer reaction product, a mole ratio ordinarily ranging from 2:1 to 30:1 HDI/polyol and preferably 8:1 to 20:1 HDI/polyol is recommended. The reaction is typically carried out at a reaction temperature ranging from 50°C to 120°C. Preferably, the reaction is carried out by maintaining the reaction temperature at 70 to 110°C with agitation.

When the preferred mole ratios of HDI to polyol are used, the reaction product can be of low viscosity and primarily comprises the urethane-linked adduct ofHDI-polyol-HDI structure (termed herein as an "ABA" structure, where A denotes HDI and B denotes a polyol). Higher molecular weight adducts containing two or more polyol moieties (termed herein as "oligomers" of urethane-linked structure "ABABA", "ABABABA", etc.) are typically less desirable. An HDI:polyol mole ratio of at least 8:1 or greater favors formation of a final prepolymer (after removal of free HDI monomer) with NCO content of at least 70% of the theoretical NCO content for a pure ABA structure and preferably at least 80% of the theoretical NCO content for a pure ABA structure.

If polyol B has a functionality of 2, then each ABA and ABABA adduct has two unreacted NCO groups, one on each of the terminal A moieties. The internal A moiety in the ABABA adduct has no remaining unreacted NCO group. Therefore, the ABABA adduct has a lower NCO content than the ABA adduct. Accordingly, in a prepolymer reaction product mixture substantially free of unreacted A, the relative content of ABA to higher molecular weight adducts can be determined by the NCO content of the mixture. By employing a large molar excess of HDI over polyol, oligomer formation is minimized.

As an illustration, consider a difunctional polyol having a number average molecular weight ("mw") of 1000 and HDI having a mw of 168. The mw of the ABA adduct is 168+1000+168=1336. It would also have two NCO end groups, each being 42 daltons. Thus, the NCO content is 2(42)/1336=6.3% for the ABA structure. Similarly, an ABABA structure possesses a mw of 2504 and an NCO content of 2(42)/2504=3.35%.

Polyol number average equivalent weight ("ew") can be obtained by titration of hydroxyl (OH) groups as described in ASTM methods E222, E326, and D4274. This quantity gives the number of grams (or other mass unit) required for one Avogadro's number of OH groups. The number average molecular weight is taken by multiplying the Ew by the functionality of the polyol. Thus, for a polyol having a functionality of 2 (i.e., 2 OH groups per polyol molecule), the number average molecular weight (mw) is twice the ew.

NCO content of prepolymers can be obtained by titration methods as described in ASTM method D2572.

The crude reaction product prepared in accordance with the present invention contains a large amount of unreacted HDI which is removed by distillation. Any distillation equipment that can be efficiently operated at deep vacuum, moderate temperature, and short residence time can be used in this step. For example, one can use an agitated film distillation system commercialized by such sources as Pope Scientific, Inc.; Artisan Industries, Inc.; GEA Canzler GmbH & Co.; Pfaudler-U.S., Inc.; InCon Technologies, L.L.C.; Luwa Corp.; UIC Inc.; or Buss-SMS GmbH for this purpose. Continuous units with internal condensers are preferred because they can reach lower operating vacuums of from 0.001 to 1 torr.

It is practical to strip excess HDI at a pressure of about 0.04 Torr and at a temperature ranging from 100°C to 175°C, and preferably at a pressure of 0.02 torr or below and at a temperature of 150°C or below. The importance of minimizing high temperature degradation of polyurethane prepolymers is described in British Patent No. 1,101,410, which recommends that distillation be conducted under vacuum with an evaporative temperature preferably under 175°C. U.S. Patent No. 4,182,825 describes the use of evaporative jacket temperatures of 150-160°C for TDI prepolymers. U.S. Patent No. 5,703,193 recommended jacket temperature of 120°C.

As a rule of thumb, it is desirable that, in operation of agitated film distillation equipment, the condenser temperature for the distillate be at least 100°C below the evaporative temperature. The condenser must also be cold enough to efficiently condense substantially all HDI vapor. A condenser temperature of 20°C or below is preferred.

If the recommended stripping conditions are observed, the residue (prepolymer) can contain less than 2% by weight free HDI, preferably less than 0.5% free HDI and most preferably less than 0.1% by weight free HDI, and the distillate can come out clean and remain transparent at room temperature. The distillate can then be reused to produce more prepolymer. Generally, the resulting prepolymers can have low viscosity, low monomeric HDI level and high NCO content (preferably 80% or more of the theoretical NCO content for ABA structure). The prepolymer can be easily chain-extended by various chain extenders at moderate processing temperatures. The chain extenders can be, for example, water, aliphatic diols, aromatic diamines, or their mixtures.

Representative of the preferred chain extenders are aliphatic diols and aromatic diamines. Suitable aliphatic diols for use herein include, but are not limited to, 1,4-butanediol (BDO), di (beta-hydroxyethyl) ether (HER), di (beta-hydroxypropyl) ether (HPR), hydroquinone-bis-hydroxyethyl ether (HQEE), 1 ,3-propanediol; ethylene glycol, 1,6-hexanediol, 1,4-cyclohexane dimethanol (CHDM) and the like and combinations thereof. Suitable aromatic diamines for use herein include, but are not limited to, 4,4'-methylene-bis(3-chloroaniline) (MBCA), 4,4'-methylene-bis(3-chloro-2,6-diethylaniline) (MCDEA), 4,4'-methylene-bis(2,6-diethylaniline) (MDEA), diethyl toluene diamine (DETDA, Ethacure™ 100 from Albemarle Corporation), tertiary butyl toluene diamine (TBTDA), dimethylthio-toluene diamine (Ethacure™ 300 from Albemarle Corporation), trimethylene glycol di-p-amino-benzoate (Vibracure® A 157 from Uniroyal Chemical Company, Inc. or Versalink 740M from Air Products and Chemicals), methylenedianiline (MDA) and methylenedianiline-sodium chloride complex (Caytur® 21 and 31 from Uniroyal Chemical Company, Inc.). If desired, aliphatic triols and tetrols, e.g., trimethylol propane, and adducts of propylene oxide, and/or ethylene oxide having molecular weight 190 to 500, such as various grades of Voranol (Dow Chemical), Pluracol (BASF Corp.) and Quadrol (BASF Corp.) can also be used.

The most preferred chain extenders are BDO, HQEE, MBCA, MDEA, trimethylene glycol di-p-amino-benzoate, MCDEA, and DETDA..

The polyurethane elastomers of the present invention can be made by chain-extending the foregoing prepolymers of low monomeric HDI content with the foregoing chain extenders by methods known in the art. Typically, the amine or diol chain extender and the prepolymer are mixed together to polymerize. The chain extension temperature for the polymerization will ordinarily range from 20°C to 150°C. The specimens so obtained are preferably aged for 4 weeks at room temperature before undergoing their intended use or standard testing for mechanical properties.

For industrial casting operations, a working life (pour life) of at least sixty seconds is typically required to mix prepolymer and chain extender and to pour the mixture into molds without bubbles. In many cases, a working life of 5 to 10 minutes is preferred. For the purpose of this invention, a working life (or pour life) shall be understood herein to mean the time for the mixture of prepolymer and chain extender to reach a Brookfield viscometer viscosity of 200 poise when each component is "preheated" to a temperature at which viscosity is 15 poise or lower and preferably 10 poise or lower.

The following non-limiting examples are illustrative of the present invention.

### EXAMPLES

The following materials were used in the examples:
PTMEG 1000: mw=951, ew=476, Polytetramethylene ether glycol (Functionality 2.0) Fomrez 66-112: mw=998, ew=499, Crompton Corp., Polyester of hexanediol and adipic acid (Functionality 2.0) ("PHAG 1000")
Desmophen 2020E: mw=2004, ew 1002, Bayer Corp., Polyhexamethylene carbonate diol (Functionality 2.0) ("PC 2000")
Luxate Aliphatic Isocyanate HM, Lyondell Chemical Company, 1,6-Hexamethylene diisocyanate ("HDI")
Desmodur W, Bayer Corp., Dicyclohexyl methane diisocyanate ("H₁₂MDI")
Adiprene® LF 90: Crompton Corp., Prepolymer consisting essentially of PTMEG and TDI with below 0.1% monomeric TDI, approx. 3.8% NCO.
Adiprene® LF 95: Crompton Corp., Prepolymer consisting essentially of PTMEG and TDI with below 0.1 % monomeric TDI, approx. 6.1% NCO.
Adiprene® LW 570: Crompton Corp., Prepolymer consisting essentially of PTMEG and H₁₂MDI without a monomer removal step for unreacted H₁₂MDI monomer (10 % by weight).
Lonzacure® MCDEA: Lonza, 4,4'-methylene-bis(3-chloro-2,6-diethylaniline)
Lonzacure® MDEA: Lonza, 4,4'-methylene-bis(2,6-diethylaniline)
MBCA: 4,4'-methylene-bis(3-chloroaniline)
1,4-Butanediol: BASF Corporation
Vibracure® A250: Crompton Corp., Blend of 1,4-butanediol and trace mixing aid;
HQEE: hydroquinone-bis-hydroxyethyl ether (Arch Chemical)
Ethacure™ 100, Albemarle Corporation, Diethyl toluene diamine ("DETDA")
Ethacure™ 300, Albemarle Corporation, Dimethylthio-toluene diamine
Vibracure® A157, Crompton Corp., Trimethylene glycol di-p-amino-benzoate ("TMGDAB") Trimethylolpropane: (Celanese Chemical Corporation)

### COMPARATIVE EXAMPLES A - E

Preparation of Elastomers from MCDEA Curative and Prepolymers Comparative Examples A through E are taken from Examples O, P, R, S and 9 from U.S. Patent No. 6,046,297, the teachings of which are incorporated herein by reference. These examples were directed to the preparation of industrial rolls such as paper mill rolls, industrial wheels, and industrial tires with low hysteresis.

Cured elastomers were prepared from Lonzacure MCDEA curative and the following prepolymers:
Comparative Example A: Adiprene® LF 90: Prepolymer consisting essentially of PTMEG and TDI with below 0.1% monomeric TDI due to removal of free TDI by vacuum distillation; approx. 3.8% NCO.
Comparative Example B: Adiprene® LF 95: Prepolymer consisting essentially of PTMEG and TDI with below 0.1% monomeric TDI due to removal of free TDI by vacuum distillation; approx. 6.1 % NCO.
Comparative Example C: Adiprene® LW 570: Prepolymer consisting essentially of PTMEG and H₁₂MDI without a monomer removal step for unreacted H₁₂MDI monomer (10 %); approx. 7.4% NCO.
Comparative Example D: Low free H₁₂MDI prepolymer. Reaction product of 10 moles H₁₂MDI with one mole of PTMEG, 650 mw, then freed of unreacted H₁₂MDI monomer by vacuum distillation on a wiped film evaporator. 6.7% NCO content.
Comparative Example E: Physical blend of 86 parts by weight Adiprene LF 90 (the LFTDI prepolymer of Comp. A) with 14 parts by weight unreacted H₁₂MDI monomer. 7.8% NCO content.

The dynamic mechanical properties of these elastomers were measured as set forth in U.S. Patent No. 6,0465,297 with the results being set forth in Table I below.

The low monomeric HDI content prepolymers of the present invention were prepared according to the following general prepolymer synthesis procedure.

### EXAMPLE 1

### PREPARATION OF HDI PREPOLYMER WITH PTMEG 1000

A prepolymer was prepared by charging first 1680 parts HDI, then 952 parts PTMEG 1000 (952 mw) to a batch reaction flask equipped with nitrogen sweep, an agitator, a thermometer, a heating mantle, and a vacuum source. The molar ratio of HDI to PTMEG (hence the equivalent ratio of NCO groups to OH groups) was 10:1. The reaction mixture was cooked for 6 hours at a temperature of 80°C with vacuum of 1-10 torr the last hour to remove entrained gases. The NCO content of this crude reaction mixture reached 28.4% at 3 hours and remained there at 6 hours.

The crude reaction mixture was then processed through a wiped film evaporator to remove unreacted HDI monomer. Vacuum was 0.04 torr or less. Jacket temperature was 140°C and the condenser temperature was 5°C.

The stripped prepolymer contained less than 0.1% free HDI. It had 6.12% NCO content, 94% of the theoretical value of 6.53% for prepolymer of pure ABA structure (1288 mw when B is 952 mw). The distillate had 50% NCO content, as expected for substantially pure HDI monomer.

### EXAMPLE 2

### PREPARATION OF HDI PREPOLYMER WITH PHAG 1000

A prepolymer was prepared by the procedures of Example 1, using 1000 mw polyhexamethylene adipate glycol as the polyol in place of PTMEG 1000. This polyester polyol is commercally available as Fomrez 66-112 (Crompton Corp.). The specific lot had 499 ew, hence 998 mw as functionality is 2.0. Phosphoric acid was added at 15 ppm.

The resulting prepolymer had 5.80% NCO content, 92% of the theoretical value of 6.30% for prepolymer of pure ABA structure (1166 mw when B is 998 mw). Also, the resulting prepolymer contained a free HDI content of 0.14%.

### EXAMPLE 3

### PREPARATION OF HDI PREPOLYMER WITH POLYCARBONATE 2000

A prepolymer was prepared by the procedures of Example 1, using 2000 mw polyhexamethylene carbonate glycol as the polyol. This polycarbonate polyol is available as Desmophen 2020E (Bayer Corp.). The specific lot had 1002 ew, hence 2004 mw as functionality is 2.0. Phosphoric acid was added at 15 ppm. The resulting prepolymer had 3.84% NCO content and contained 0.08% free HDI content.

The polyurethane elastomers formed from the low monomeric HDI content prepolymers of the present invention were prepared according to the following general synthesis procedure.

### EXAMPLE 4

### AN ELASTOMER FROM HDI/PTMEG PREPOLYMER AND MCDEA

An elastomer was prepared by mixing the HDI prepolymer of Example 1 with Lonzacure MCDEA by the procedures used in Comparative Examples A-E. Thus, 100 parts by weight prepolymer was mixed with 27 parts by weight MCDEA (98% of the MCDEA needed to provide one amine group per isocyanate group in the prepolymer).

The dynamic mechanical properties of this elastomer were then measured. The results of the measurements are set forth below in Table I.

**TABLE I**

| Dynamic Mechanical Properties of Elastomers from PTMEG-Based Prepolymers and | | | | | | |
|---|---|---|---|---|---|---|
| MCDEA Curative | | | | | | |
| Comp. Example/Example | Comp. A | Comp. B | Compo. C | Comp. D | Comp. E 4 | |
| Example of U.S. Patent | O | P | R | S | 9 | (New) |
| No. 6,046,297 | | | | | | |
| Prepolymer %NCO | 3.8 | 6.1 | 9.4 | 6.7 | 7.8 | 6.1 |
| Isocyanate Types | TDI | TDI | H₁₂MDI | H₁₂MDI | T D I -H₁₂MDI | HDI |
| G', STORAGE MODULUS | | | | | | |
| (dynes/cm² x 10⁸⁾ | | | | | | |
| 30°C | 4.5 | 12 | 41 | 31 | 19 | 5.0 |
| 200°C | 2.2 | 5.1 | 0.93 | Sample softened | 7.3 | 3.3 |
| % Retention, | 50% | 43% | 2% | 0 | 38% | 66% |
| 200°C/ 30°C | | | | | | |
| TANGENT DELTA | | | | | | |
| 30°C | 0.036 | 0.066 | 0.089 | 0.12 | 0.051 | 0.037 |
| 150°C | 0.017 | 0.027 | 0.19 | 0.028 | 0.049 | 0.017 |
| 200°C | 0.032 | 0.034 | 0.14 | Sample softened | 0.076 | 0.027 |

Dynamic mechanical properties were determined on a Rheometrics dynamic mechanical spectrometer under conditions of 1% strain and 10 Hz frequency. Properties measured included storage modulus, loss modulus, and tangent delta. From these properties, a comparative power loss also may be calculated.

Storage Modulus, G' in Table I, is given in units of dynes/cm². In practical applications, such as paper mill rolls and other dynamic applications, it is desirable that G' remain constant over the range of 30°C. to 230°C, and especially from 30°C to 150°C. If G' decreases too much over this range, articles in dynamic service may fail from heat buildup.

Tangent Delta is a dimensionless number indicating hysteresis. Lower values are typically desired throughout the temperature range from 30°C to 200°C, and especially from 30°C to 150°C.

As the data show, the dynamic mechanical properties of the elastomer within the scope of this invention (Example 4) are superior to those of prior art Comparative Examples A through E, even those based on aromatic TDI. For example, the storage modulus (G') resisted dropping throughout the temperature range of 30-200°C, thus retaining 66% of its 30°C value at 200°C. Also, the tangent delta remained low throughout this range. This is highly desirable and unentirely unexpected.

### EXAMPLE 5

### AN ELASTOMER FROM HDI/PHAG PREPOLYMER AND MCDEA

A polyurethane elastomer was prepared by mixing the HDI prepolymer of Example 2 with Lonzacure MCDEA by the procedures used in Comparative Examples A-E. Thus, 100 parts by weight prepolymer was mixed with 26 parts by weight MCDEA (98% of the MCDEA needed to provide one amine group per isocyanate group in the prepolymer).

### EXAMPLE 6

### AN ELASTOMER FROM HDI/POLYCARBONATE PREPOLYMER AND MCDEA

A polyurethane elastomer was prepared by mixing the HDI prepolymer of Example 3 with Lonzacure® MCDEA by the procedures used in Comparative Examples A-E. Thus, 100 parts by weight prepolymer was mixed with 17 parts by weight MCDEA (98% of the MCDEA needed to provide one amine group per isocyanate group in the prepolymer).

The physical properties for the resulting elastomers of Examples 4-6 are summarized below in Table II.

**TABLE II**

| Polyurethane Elastomers from HDI Prepolymers and MCDEA Curative | | | |
|---|---|---|---|
| Example | 4 | 5 | 6 |
| Polyol Type, mw | PTMEG 1000 | PHAG 1000 | PC 2000 |
| Prepolymer %NCO | 6.1 | 5.8 | 3.8 |
| Hardness, Shore A | 97 | 98 | 93 |
| 100% Modulus, psi | 2210 | 2320 | 1300 |
| Elongation at Break, % | 480 | 290 | 350 |
| Tensile Strength, psi | 4210 | 4760 | 5130 |
| Compression Set, % | | | |
| 22 hour @ 70°C | 45 | 33 | -- |
| 22 hour@ 100°C | 62 | 59 | -- |
| G', Storage Modulus | | | |
| (dynes/cm² x 10⁸⁾ | | | |
| 30°C | 5.0 | 6.9 | 3.0 |
| 200°C | 3.3 | 4.0 | 2.3 |
| % Retention, | 66% | 58% | 77% |
| 200°C/ 30°C | | | |
| TANGENT DELTA | | | |
| 30°C | 0.037 | 0.08 | 0.07 |
| 150°C | 0.017 | 0.02 | 0.014 |
| 200°C | 0.027 | 0.02 | 0.017 |

### EXAMPLES 7-12

### ELASTOMERS FROM HDI/PTMEG PREPOLYMER AND VARIOUS CURATIVES

Elastomers were prepared by mixing the HDI prepolymer of Example 1 with various diamine and diol curatives. The diamines were used at 98% of the weight needed to provide one amine group per isocyanate group in the prepolymer. The diols were used at 95% of the weight needed to provide one hydroxyl group per isocyanate group in the prepolymer. In all cased the elastomers were allowed to cure 24 hours at 127°C.

**TABLE III**

| Polyurethane Elastomers from HDI/PTMEG Prepolymer and Various Curatives | | | | | | |
|---|---|---|---|---|---|---|
| Example | 7 | 8 | 9 | 10 | 11 | 12 |
| Curative Type | TMGDAB | DETDA | MDEA | Ethacure™ 300 | Vibracure® A 250 | HQEE |
| Curative ew | 157 | 89 | 155 | 107 | 45 | 99 |
| Curative, g/100g | 22.4 | 12.7 | 22.1 | 15.3 | 6.2 | 13.7 |
| prepolymer | | | | | | |
| Hardness, Shore A | 90 | 95 | 97 | 81 | 96 | 96 |
| 100% Modulus, psi | 900 | 1240 | 1860 | 660 | 1400 | 1500 |
| Elongation at Break, % | 520 | 950 | 340 | 820 | 780 | 320 |
| Tensile Strength, psi | 4130 | 5890 | 3440 | 3690 | 4280 | 2130 |

### TESTING OF POLYURETHANE ELASTOMERS AS GOLF BALL COVERS

As disclosed in U.S. Patent No. 5,334,673, polyurethanes are advantageous in the production of golf ball covers because they have the feel and click of balata covered balls with much greater cut resistance. In addition, the polyurethanes are generally more resilient than balata, allowing balls to be made with both good feel and good distance. Resilience can be measured as percent rebound of a steel ball bouncing on a flat elastomer sample from a height of one meter, where the sample is at least 0.5 inches thick and is firmly mounted so as to prevent movement. Ionomer covers such as SURLYN® have good resilience, but are harder and do not give the click and feel of the polyurethane and balata covers.

Another advantageous feature of polyurethane formulations is shear resistance, as disclosed in U.S. Patent No. 5,908,358. Shear resistance measures the damage to a cover from the impact of club with sharp grooves, which can tear away bits of the cover. In contrast, cut resistance measures the resistance to damage of the cover from a miss hit shot, where the leading edge of the iron cuts directly into the cover. Shear resistance of polyurethane formulations can vary. One such method that can be used to improve the shear resistance of a polyurethane formulation is disclosed in U.S. Patent No. 5,908,358.

U.S. Patent No. 6,309,313 discloses convenient methods for assessing the resilience and groove shear resistance of polyurethane formulations as golf ball covers, the contents of which are incorporated herein by reference.

### EXAMPLE 13

### PREPARATION OF HDI PREPOLYMER WITH RECYCLED HDI DISTILLATE

A prepolymer was prepared by the procedures of Example 1, substituting the HDI distillate from Example 1 for the fresh HDI. In addition, a different batch of PTMEG 1000 was used. This batch had 988 mw.

The stripped prepolymer had 5.70% NCO content, 90% of the theoretical value of 6.35% for prepolymer of pure ABA structure (1324 mw when B is 988 mw).

### EXAMPLE 14

### A GOLF BALL FROM AN ELASTOMER OF HDI PREPOLYMER AND 1,4- BUTANEDIOL

The HDI prepolymer of Example 13 was mixed with 1,4-butanediol in a weight ratio 100/6.0, providing 98/100 ratio of hydroxyl groups to isocyanate groups. A commercially available white pigment paste was also included in the mixture at 2 parts per 100 parts prepolymer. The resultant mixture was de-aerated and cast into a mold cavity containing a golf ball core to form a standard sized golf ball. The golf ball was cured at 70°C for 16 hours.

### EXAMPLE 15

### A GOLF BALL FROM AN ELASTOMER OF HDI PREPOLYMER AND 1,4-BUTANEDIOL WITH TRIMETHYLOLPROPANE

A golf ball was prepared by the procedures of Example 14, substituting an 80/20 blend by weight of 1,4-butanediol and trimethylolpropane for the pure 1,4-butanediol and mixing the blend with the HDI prepolymer of Example 13. (Each of the two components t is particularly advantageous when forming the cast polyurethane elastomers, to form the of the blend had ew 45). The prepolymer/curative weight ratio was 100/6.0, providing 98/100 ratio of hydroxyl groups to isocyanate groups. The resultant mixture was de-aerated and cast into a mold cavity containing a golf ball core to form a standard sized golf ball. The golf ball was cured at 70°C for 16 hours.

The golf balls of Examples 14 and 15 were tested side by side with three commercially available golf balls: (1) the Nike Tour Accuracy, which has a thermoplastic polyurethane cover; (2) the Strata Professional Balata, which has a balata cover; and (3) the Nike Precision Distance, which has an ionomer cover. All balls were hit by a golf professional with a pitching wedge having sharp grooves and the contact points were marked. Damage to the balls was rated on a 1 to 10 scale, where 10 indicated no marks at the point of contact and the ball is indistinguishable from a new ball. A 5 indicated a ball with substantial damage to the cover at the point of contact, but no loss of material. A I indicated a ball with cover material loss at the point of contact. Three different observers rated the balls and the ratings were averaged as follows:

| | |
|---|---|
| Example 14: | 7.3 |
| Example 15: | 6.7 |
| Nike Tour Accuracy | 5.0 |
| Strata Professional Balata | 4.9 |
| Nike Precision Distance | 1.0 |

The golf balls of Examples 14 and 15 containing the polyurethane elastomers of this invention were also tested for their colorfastness by exposing the golf balls in a Weather-o-Meter under a UV exposure of 5500 watts for 36 hours. The results of this test indicated no change in color or fading to the polyurethane elastomer covers of the golf balls.

The golf balls of Examples 14 and 15 containing the polyurethane elastomers of this invention were also tested for resilience by dropping a steel ball on the elastomer and measuring the height of rebound. In this test, recovery of at least 50% of the drop height is considered good. The two elastomers each exhibited 70% resilience.

## Claims

1. A polyurethane elastomer comprising the reaction product of (a) a prepolymer terminated with HDI, said prepolymer comprising no more than 2 wt.% free HDI and having at least 70% of theoretical NCO content for pure ABA structure, where A denotes HDI and B denotes a polyol, with (b) one or more hydroxyl or amine-functional chain extenders, wherein the chain extender is selected from the group consisting of 1,4-butanediol, 1,3-propanediol, ethylene glycol, 1,6-hexanediol, hydroquinone-bis-hydroxyethyl ether, resorcinol di(beta-hydroxyethyl)ether, resorcinol di(beta-hydroxypropyl) ether, 1,4-cyclohexane dimethanol, an aliphatic triols, an aliphatic tetrols, 4,4'-methylene-bis(3-chloroaniline), 4,4'-methylene-bis(3-chloro-2,6-diethylanine), 4,4'-methylene-bis(2,6-di-ethylaniline), diethyl toluene diamine, tertiary butyl toluene diamine, dimethylthio-toluene diamine, trimethylene glycol di-p-amino-benzoate, methylenedianiline, methylenedianiline-sodium chloride complex and mixtures thereof, wherein the equivalent ratio of chain extender to prepolymer is in the range of from 0.7:1 to 1.2:1.

2. The polyurethane elastomer of Claim 1 wherein the HDI-terminated prepolymer comprises less than 0.5% by weight of unreacted HDI monomer.

3. The polyurethane elastomer of Claim 1 wherein the polyol is selected from the group consisting of polyesters, polycaprolactones, polyethers, polycarbonates, hydrocarbon polyols and mixtures thereof.

4. The polyurethane elastomer of Claim 1 wherein the polyol is selected from the group consisting of a polyester of adipic acid, a polyether of tetrahydrofuran, a polycaprolactone, a polycarbonate, a hydrocarbon polyol and mixtures thereof, the polyol having a molecular weight from 100 to 12,000 and having a functionality of 1.9 to 2.3.

5. The polyurethane of claim 3 wherein the polyol is polytetramethylene ether glycol.

6. A golf ball comprising a core and a cover, the cover comprising a polyurethane elastomer according to Claim 1.

7. A wheel or roll comprising a core and a cover, the cover comprising a polyurethane elastomer according to Claim 1.

## Patentansprüche

1. Ein Polyurethanelastomer enthaltend das Reaktionsprodukt von (a) einem mit HDI terminierten Präpolymer, besagtes Präpolymer nicht mehr als 2 Gewichts-% freies HDI enthaltend und mit einem theoretischen NCO-Gehalt von mindestens 70% für eine reine ABA-Struktur, worin A HDI bedeutet und B ein Polyol bedeutet, mit (b) einem oder mehreren hydroxyl- oder aminfunktionellen Kettenverlängerern, worin der Kettenverlängerer aus der aus 1,4-Butandiol, 1,3-Propandiol, Ethylenglykol, 1,6-Hexandiol, Hydrochinon-bis-hydroxyethyl-ether, Resorcinol-di(beta-hydroxyethyl)ether, Resorcinol-di(beta-hydroxypropyl)ether, 1,4-Cyclohexandimethanol, einem aliphatischen Triol, einem aliphatischen Tetrol, 4,4'-Methylen-bis(3-chloranilin), 4,4'-Methylen-bis(3-chlor-2,6-diethylanilin), 4,4'-Methylen-bis(2,6-di-ethylanilin), Diethyl-toluoldiamin, Tertiärbutyltoluoldiamin, Dimethylthio-toluoldiamin, Trimethylenglykol-di-p-amino-benzoat, Methylendianilin, Methylendianilin-Natriumchlorid-Komplex und Mischungen davon bestehenden Gruppe ausgewählt ist, worin das Äquivalentverhältnis von Kettenverlängerer zu Präpolymer im Bereich von 0,7 : 1 bis 1,2 : 1 liegt.

2. Das Polyurethanelastomer des Anspruchs 1, worin das HDI-terminierte Präpolymer weniger als 0,5 Gewichts-% nicht umgesetztes HDI-Monomer enthält.

3. Das Polyurethanelastomer des Anspruchs 1, worin das Polyol ausgewählt ist aus der aus Polyestern, Polycaprolactonen, Polyethern, Polycarbonaten, Kohlenwasserstoffpolyolen und Mischungen davon bestehenden Gruppe.

4. Das Polyurethanelastomer des Anspruchs 1, worin das Polyol aus der aus einem Polyester von Adipinsäure, einem Polyether von Tetrahydrofuran, einem Polycaprolacton, einem Polycarbonat, einem Kohlenwasserstoffpolyol und Mischungen davon bestehenden Gruppe ausgewählt ist, wobei das Polyol ein Molekulargewicht von 100 bis 12.000 hat und eine Funktionalität von 1,9 bis 2,3 hat.

5. Das Polyurethan des Anspruchs 3, worin das Polyol Polytetramethylenetherglykol ist.

6. Ein Golfball enthaltend einen Kern und eine Hülle, wobei die Hülle ein Polyurethanelastomer gemäß Anspruch 1 enthält.

7. Ein Rad oder eine Rolle enthaltend einen Kern und eine Hülle, wobei die Hülle ein Polyurethanelastomer gemäß Anspruch 1 enthält.

## Revendications

1. Elastomère de polyuréthane comprenant le produit de réaction de (a) un prépolymère terminé par HDI, ledit prépolymère comprenant pas plus de 2 % en poids de HDI libre et ayant au moins 70 % de la teneur théorique en NCO pour la structure ABA pure, où A désigne HDI et B désigne un polyol, avec (b) un ou plusieurs allongeurs de chaîne à fonctionnalité hydroxyle ou amine, l'allongeur de chaîne étant choisi dans le groupe consistant en le 1,4-butanediol, le 1,3-propanediol, l'éthylène glycol, le 1,6-hexanediol, l'hydroquinone-bis-hydroxyéthyl éther, le résorcinol di(bêta-hydroxyéthyl)éther, le résorcinol di(bêta-hydroxypropyl) éther, le 1,4-cyclohexane diméthanol, un triol aliphatique, un tétrol aliphatique, la 4,4'-méthylène-bis(3-choloroaniline), la 4,4'-méthylène-bis(3-chloro-2,6-diéthylaniline), la 4,4'-méthylène-bis(2,6-di-éthylaniline), la diéthyl toluène diamine, la tert-butyl toluène diamine, la diméthylthio-toluène diamine, le di-p-amino-benzoate de triméthylène glycol, la méthylènedianiline, la complexe méthylènedianiline-chlorure de sodium et leurs mélanges, le rapport équivalent de l'allongeur de chaîne au prépolymère se situant dans la plage de 0,7 : 1 à 1,2 : 1

2. Elastomère de polyuréthane selon la revendication 1, dans lequel le prépolymère terminé par HDI comprend moins de 0,5 % en poids de monomère HDI n'ayant pas réagi.

3. Elastomère de polyuréthane selon la revendication 1, dans lequel le polyol est choisi dans le groupe consistant en les polyesters, les polycaprolactones, les polyéthers, les polycarbonates, les polyols d'hydrocarbures et leurs mélanges.

4. Elastomère de polyuréthane selon la revendication 1, dans lequel le polyol est choisi dans le groupe consistant en un polyester d'acide adipique, un polyéther de tétrahydrofurane, une polycaprolactone, un polycarbonate, un polyol d'hydrocarbure et leurs mélanges, le polyol ayant une masse moléculaire de 100 à 12 000 et ayant une fonctionnalité de 1,9 à 2,3.

5. Polyuréthane selon la revendication 3, dans lequel le polyol est le polytétraméthylène éther glycol.

6. Balle de golf comprenant un coeur et une enveloppe, l'enveloppe comprenant un élastomère de polyuréthane tel que défini à la revendication 1.

7. Roue ou rouleau comprenant un coeur et une enveloppe, l'enveloppe comprenant un élastomère de polyuréthane tel que défini la revendication 1.
